# EUROPEAN PATENT APPLICATION

(11) **EP 1 973 315 A1**
(43) Date of publication of application: **24.09.2008**
(21) Application number: 07251193.4
(22) Date of filing: 21.03.2007
(51) Int. Cl.: H04M 1/274

(54) **Image recognition for placing a call**

(71) Applicant: Lucent Technologies Inc., Murray Hill, New Jersey 07974-0636 (US)
(72) Inventor: van Willigenburg, Willem Cornelis, Hilversum 1223 JR (NL)
(74) Representative: Sarup, David Alexander

(57) **Abstract**

A mobile station device (22) includes a camera (24) and a calling module (40) that uses information regarding images captured by the camera (24) for automatically placing a call from the mobile station device (22). An example method includes determining a number to call based on an image captured by the camera (24) and automatically calling the number.

## Description

### 1. Field of the Invention

This invention generally relates to communication. More particularly, this invention relates to wireless communications.

### 2. Description of the Related Art

Wireless communication devices are currently very popular. A variety of different devices are available. Cell phones are one example mobile station wireless communication device. Current cell phones have many features available including a digital camera. Example uses for such cameras include taking pictures and then transmitting them to another using a text messaging technique. Individuals can also use their camera phones for obtaining images that can be used as a background on their mobile phone display screen, for example.

Those skilled in the art are always striving to make improvements and to provide enhanced features for users of wireless communication devices.

### SUMMARY

An exemplary mobile station device includes a camera that is configured to capture an image of something in a field of vision of the camera. A calling module determines a number to call based on the captured image and automatically calls the number.

An exemplary method of communicating using a mobile station device equipped with a camera includes capturing an image with the camera. The captured image is used to determine a number and to automatically call the number.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an arrangement that is useful with an embodiment of this invention.

Figure 2 is a flowchart diagram summarizing one example approach.

Figure 3 is a flowchart diagram summarizing one example process for automatically calling a number.

### DETAILED DESCRIPTION

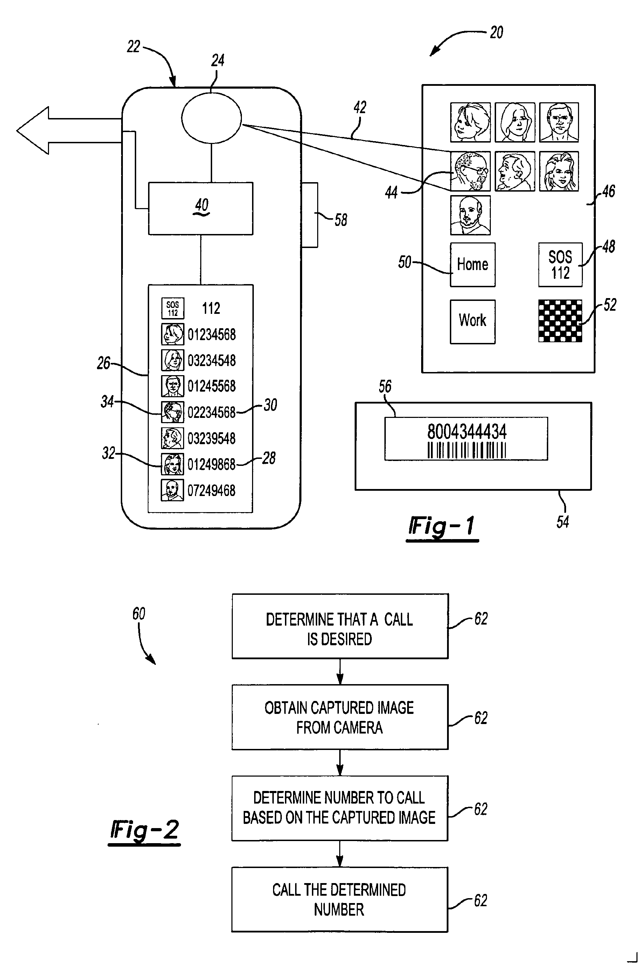

Figure 1 schematically shows an arrangement 20 that allows an individual to automatically call a number using a mobile station 22. In this example, the mobile station 22 includes a camera 24 and a memory portion 26. The camera 24 operates in a generally known manner. The memory portion 26 includes a plurality of stored numbers 28, 30 and a plurality of associated stored images 32, 34. In this example, each of the stored numbers has a stored image associated with it.

A calling module 40 receives information from the camera 24 regarding a captured image obtained by the camera 24. The calling module 40 then uses that image or information derived from the captured image to determine a number to call. The calling module 40 is capable of automatically calling the determined number. In one example, the image includes an indication of the number to call. In another example, the calling module 40 determines whether the captured image corresponds to any of the stored images in the memory portion 26. If so, the calling module 40 automatically calls the number associated with that corresponding image to place a call from the mobile station 22.

In the example of Figure 1, the camera 24 is oriented so that a field of vision 42 encompasses an image 44 stored on an image collection 46 that is separate from the mobile station 22. In one example, the image collection 46 comprises a poster or a single sheet of material upon which the images are located as schematically shown at 44, 48, 50 and 52. Another example image collection 46 is presentable on a computer screen. In another example, the image collection 46 comprises a rolodex-type collection of images, which may each be on an individual sheet of cardstock paper, for example. A poster board image collection 46 may be useful in an individual's home but not within a vehicle, for example. Those skilled in the art who have the benefit of this description will realize how best to arrange the image collection 46 to meet the needs of a particular situation.

In one example, an individual establishes the image collection 46 prior to storing any images in the memory portion 26. In this example, the image collection 46 is used for capturing images with the camera 24 and then associating the captured images with the stored numbers in the memory portion 26 to provide the associated stored images. Subsequently capturing the same image for purposes of automatically initiating a call may be accomplished using the same image collection 46 or another one having sufficiently similar imagery for the calling module 40 to recognize a captured image as corresponding to one of the stored images.

One example technique includes capturing the image to be stored in the memory portion 26 and sending a copy of that image from the mobile station 22 to another device using a known communication technique such that the other device is capable of reproducing a visible copy of that image that can later be used for purposes of initiating an automated call.

As schematically shown in Figure 1, images such as the image 44 may be a photographic representation of an individual whose number is stored in the memory portion 26. The image 48 corresponds to a public service or emergency response number that may be needed for emergency situations, for example. The image 50 includes text such as letters or numbers to identify a particular number that an individual may wish to call. The image 52 includes a selected color or pattern corresponding to a stored image in the memory portion 26.

The example of Figure 1 also includes an item 54 such as a product or package having an image 56 such as a bar code. In one example, the image 56 provides information to the calling module 40 regarding a number that can be called for customer support from the provider of the product 54. In such an example, the calling module 40 includes image recognition capability that allows it to determine the actual number to call directly from the image 56 without requiring the user of the mobile station 22 to prestore any number in association with that image. The image 48 for an emergency response provides an indication of the actual number in one example so that a user need not prestore that number to have it automatically available.

The example mobile station 22 also includes a call initiator 58 such as a keypad button or a menu selection to allow a user to initiate a call to be made automatically by the calling module 40. Upon activation of the call initiator 58, the calling module 40 obtains a captured image from the camera 24 and begins an automated call process.

Figure 2 includes a flowchart diagram 60 summarizing an example approach. A determination that a call is desired is made at 62. In the example of Figure 1, this occurs responsive to a user providing an indication that a call is desired by activating the call initiator 58, for example. At 64, the calling module 40 obtains a captured image from the camera 24. The captured image is used to determine the number to call at 66. At 68, the determined number is automatically called.

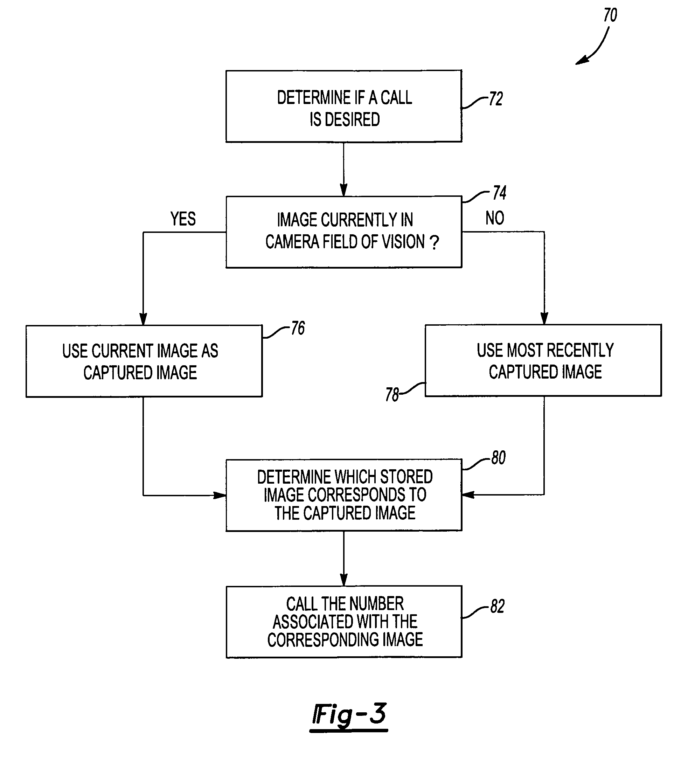

Figure 3 includes a flowchart diagram 70 that summarizes one example approach for placing a call to a prestored number in the memory portion 26 using the camera capabilities of the mobile station 22. At 72, a determination is made whether a call is desired. In the example of Figure 1, when an individual uses the call initiator 58, that provides an indication that a call is desired. At 74, the calling module 40 determines whether an image is available based on whether anything is currently in the field of vision 42 of the camera 24. If so, the calling module 40 proceeds at 76 to use the current image as the captured image. If not, the calling module 40 uses a most recently captured image at 78.

The calling module 40 proceeds to determine which stored image from the memory portion 26 corresponds to the captured image at 80. There are a variety of known image matching and image learning techniques that could be used. One example includes using optical character recognition techniques for determining whether a stored image corresponds to a captured image. Those skilled in the art who have the benefit of this description will be able to select from among known techniques and to suitably program the calling module 40 for purposes of recognizing when a captured image corresponds to at least one of the stored images.

Once a suitable level of correspondence is determined, the number associated with the corresponding image is called at 82. Such a process allows for an individual to simply point the camera 24 toward a desired object or visual representation for automatically placing a call to a number associated with that which is in the field of vision 42 of the camera 24 as stored in the memory portion 26.

In one example, suitable correspondence is determined based on a sufficient match between the contents of the captured image and the stored image. One example includes using a captured image that is based on what is currently in the field of vision 42 of the camera 24 and determining whether the matching exists for at least a predetermined amount of time (e.g., five seconds). When there is a sufficient match for a sufficiently long time, the calling module instigates the call.

In the example of Figure 1, the captured image 44 corresponds to the stored image 34. Accordingly, the calling module 40 calls the number 30, which is the number associated with the stored image 34 in the memory portion 26.

In some examples, the captured image will provide information to the calling module 40 regarding the number to be called from the captured image, itself. In Figure 1, for example, the image 56 provides information to the calling module 40 that indicates the number to be called so that the number does not need to be prestored in the memory portion 26. In such an example, the calling module 40 includes suitable programming for recognizing visible numbers, a bar code or other indication of a number to be called and responds accordingly. Given this description, those skilled in the art will be able to select or develop suitable programming to configure a calling module 40 to have such number recognition abilities based on a captured image containing suitable information.

One advantage to the disclosed examples is that they allow for automating a calling process using the available capabilities of a camera associated with a mobile station. For example, a physically impaired individual need only point the mobile station in a direction so that the camera captures an image associated with a desired number for purposes of placing the call. Another example use would be in a situation where an individual cannot focus sufficient attention on a menu screen on the mobile station for purposes of placing a call but can more easily direct the field of vision 42 of the camera 24 at a particular image for purposes of placing the call.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A mobile station device (22), comprising:
a camera (24) configured to capture an image; and
**characterized by** a calling module (40) that automatically calls a number determined from the captured image.

2. The device (22) of claim 1, comprising:
a memory portion (26) containing a plurality of stored images each associated with a number that can be called from the mobile station device (22); and
wherein the calling module (40) determines if a captured image corresponds to one of the stored images and automatically calls the number associated with the one of the stored images.

3. The device of claim 2, wherein the captured image and the one of the stored images each comprise an image of at least one of a person, an object, a design, letters, numbers, a bar code or a color.

4. The device of claim 1, wherein the calling module (40) determines the number to call from the contents of the captured image.

5. The device of claim 1, wherein the calling module (40) uses optical character recognition for recognizing the contents of the captured image.

6. The device of claim 1, comprising:
a call initiator (58) that indicates when a call from the mobile station device (22) is desired, the calling module (40) determining the number to call responsive to activation of the call initiator.

7. The device of claim 6, wherein the call initiator (58) comprises at least one of a button or a menu selection.

8. The device of claim 1, wherein the calling module (40) uses a currently captured image from the camera.

9. The device of claim 1, wherein the calling module (40) uses a most recently captured image for determining the number to call.

10. A method of placing a call, comprising:
determining a number to call based upon an image captured by a camera (24) associated with a mobile station device (22); and
automatically calling the determined number from the mobile station device (22).

11. The method of claim 10, comprising
storing a plurality of images each associated with a number that can be called form the mobile station device.

12. The method of claim 11, comprising
determining if a captured image corresponds to one of the stored images; and
automatically calling the number associated with the one of the stored images.

13. The method of claim 10, comprising
determining the number to call from the contents of the captured image.

14. The method of claim 10, comprising
using optical character recognition for recognizing the contents of the captured image.

15. The method of claim 10, comprising
determining when a call from the mobile station device is desired; and
responsively automatically determining the number to call.

16. The method of claim 10, comprising
using a currently captured image for determining the number to call.

17. The method of claim 10, comprising
using a most recently captured image for determining the number to call.
